Europäisches Patentamt

European Patent Office

Office européen des brevets

(11) Numéro de publication : **0 165 181**
**B1**

(12) FASCICULE DE BREVET EUROPÉEN

(45) Date de publication du fascicule du brevet :
19.10.88

(51) Int. Cl.⁴ : **G 01 N   1/20**

(21) Numéro de dépôt : 85420080.5

(22) Date de dépôt : 02.05.85

(54) **Dispositif de prélèvement et de conditionnement d'échantilions sous forme solide, liquide ou gazeuse en vue de leur analyse.**

(30) Priorité : 07.05.84 FR 8407244

(43) Date de publication de la demande :
18.12.85 Bulletin 85/51

(45) Mention de la délivrance du brevet :
19.10.88 Bulletin 88/42

(84) Etats contractants désignés :
BE CH DE GB IT LI

(56) Documents cités :
DE-A- 2 015 126
US-A- 1 521 545
US-A- 3 949 614
US-A- 4 024 765

(73) Titulaire : OMYA S.A.
35, Quai André Citroen
F-75725 Paris Cedex 15 (FR)

(72) Inventeur : Cabannes, Claude
Draille des Troupeaux
F-13810 Eygalières (FR)

(74) Mandataire : Gaucherand, Michel
OMYA S.A. Département Propriété Industrielle 35,
Cours Aristide Briand
F-69300 Caluire (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif de prélèvement automatique d'un volume calibré de matériaux solides pulvérulents, liquides ou gazeux, présents dans une zone de prélèvement dans laquelle règne une pression supérieure, égale ou inférieure, à la pression atmosphérique, et de conditionnement de ces matériaux prélevés en vue de leur analyse.

Depuis longtemps déjà, l'industrie, telle que par exemple celle de la chimie, de la métallurgie, de l'agro-alimentaire, ... utilise des matières premières qu'elle transforme en des produits intermédiaires, ou en produits finis que l'homme met en œuvre, utilise ou consomme pour sa survivance, son bien-être...

Or, les procédés de transformation des matières premières en produits intermédiaires ou en produits finis, se présentant sous forme pulvérulente, liquide ou gazeuse, passent par des étapes successives d'élaboration qui nécessitent l'exécution de contrôles tels que de forme, par exemple leur granulométrie, de compositions chimiques, de propriétés physiques, de réactivité, de pureté, etc...

Pour effectuer les contrôles appropriés, l'homme de l'art doit réaliser le prélèvement d'échantillons homogènes, représentatifs et répétitifs des produits obtenus au cours de la transformation des matières premières, pour qu'ils soient examinés d'une manière continue, ou discontinue, et que les insuffisances et/ou imperfections soient détectées et corrigées par une intervention rapide, par exemple sur le cycle de transformation.

Or pendant longtemps, les technologies de prélèvement d'échantillons de matières à analyser au cours de processus industriels, ont consisté en des appareillages manuels de prise d'échantillons en des lieux et à des moments insuffisamment précis pour que les échantillons soient, pour l'homme de l'art, incontestables, c'est-à-dire représentatifs d'un état donné en un lieu repéré et à un moment précis. C'est ainsi, par exemple, qu'en hydrométallurgie, pour déterminer et suivre la vitesse de décantation dans un décanteur de grande dimension (diamètre : vingt mètres, hauteur : cinq mètres), d'une phase solide d'une suspension aqueuse résultant de l'attaque d'un minerai, on a pratiqué la prise d'échantillon en descendant une capacité cylindrique close jusqu'à une profondeur fixée, mais approximative car observée par le déroulement d'une longueur de câble, puis en ouvrant et refermant, par une commande manuelle, la dite capacité avant de la remonter, quand elle a atteint la zone présumée de prélèvement. Mais le point de prélèvement de la suspension n'est jamais exactement le même d'une opération de prélèvement à une autre, de telle sorte que l'analyse de chaque prélèvement donne une information approximative, mais insuffisamment objective et représentative de l'état de décantation de la suspension.

Depuis lors, des dispositifs améliorés de prélèvement d'échantillons ont été proposés à l'homme de l'art, qui sont susceptibles de réaliser ces prélèvements de manière précise et méthodique, hors de toute intervention humaine, afin que chaque échantillon prélevé soit bien représentatif de la matière à contrôler.

Un exemple de dispositif amélioré de prélèvement automatique d'échantillon est décrit dans le brevet français 2,258,108. Ce dispositif comporte une sonde horizontale cylindrique dans laquelle est ménagé un évidement longitudinal de contenance déterminée et de forme appropriée à la nature de la matière à échantillonner, des moyens d'entraînement destinés à entraîner la sonde en mouvement alternatif longitudinal, et des moyens de guidage de la sonde destinés à orienter l'évidement de la sonde vers le haut en position de remplissage lorsque la sonde se trouve à l'intérieur de la zone de prélèvement et vers le bas en position de déversement dans une zone réceptrice lorsqu'elle a été retirée de la zone de prélèvement, et se caractérise par le fait que la sonde est munie d'un obturateur constitué par un manchon coaxial cylindrique, pourvu d'une ouverture de dimensions au moins égales à celles de l'évidement réalisé dans la sonde, cet obturateur étant entraîné en mouvement alternatif longitudinal par des moyens d'entraînement et en mouvement de rotation par d'autres moyens de guidage destinés à faire tourner le manchon relativement à la sonde, de manière que l'évidement de la sonde soit en coïncidence avec l'ouverture du manchon aux moments où la sonde se trouve en position de prélèvement et de déversement de l'échantillon, et que l'évidement soit masqué pendant les phases intermédiaires de la sonde.

Ce dispositif présente toutefois les inconvénients de manquer, d'une part d'étanchéité entre les zones de prélèvement et de déversement de l'échantillon, et d'autre part de protection des caractéristiques physiques de l'échantillon entre le prélèvement et le déversement par infiltration de particules étrangères à l'échantillon. C'est pourquoi un premier perfectionnement de ce dispositif a été proposé et décrit dans le brevet FR-A-2.271.559. Ce dispositif perfectionné comporte un obturateur (manchon) cylindrique coaxial fixe et non plus mobile, solidairement étanche de la cloison de séparation entre les zones de prélèvement et de déversement, l'ouverture précitée de l'obturateur étant placée dans la zone de déversement tournée vers le bas. La sonde de prélèvement se déplace à l'intérieur de l'obturateur cylindrique fixe, ses mouvements de translation et de rotation étant guidés par une rainure continue placée sur l'obturateur et un doigt radial solidaire de la sonde faisant saillie dans la rainure.

Mais le dispositif décrit dans le brevet FR-A-2.258.108 manifeste en outre un autre inconvénient qui se révèle lors du fonctionnement de la sonde lorsque celle-ci se retirant de la zone de prélèvement coince un grain de matière de l'échantillon entre le bord arrière de son évidement et l'extrémité de l'obturateur qui débouche dans la zone de prélèvement. Pour limiter cet inconvénient, un deuxième perfectionnement du dispositif précité a été revendiqué dans le brevet FR-A-2.288.307. Ce deuxième perfectionnement consiste à munir l'extrémité antérieure de la sonde située en avant de l'évidement, d'un méplat ou d'une coupe de profondeur supérieure au calibre des grains de la matière à échantillonner.

Dès lors, à la fin du mouvement de rétraction de la sonde, ce méplat (ou la coupe) crée avec la paroi interne de l'obturateur un espace permettant le dégagement des grains de matière sans coincement, ni destruction.

Ce dispositif et ses perfectionnements qui offrent des avantages indéniables à l'égard des technologies antérieures dans le domaine de l'échantillonnage des matières granuleuses, présentent toutefois des inconvénients autres que ceux déjà évoqués, qui peuvent être majeurs et particulièrement gênants pour leur exploitation industrielle. Un premier inconvénient est, par exemple, le manque certain d'étanchéité entre les zones de prélèvement et de déversement et entre la sonde de prélèvement, l'obturateur cylindrique coaxial (qu'il soit fixe ou non) et les moyens de guidage. Un autre inconvénient réside dans le fait que la forme de la sonde dans la partie d'évidement est autodestructrice des joints d'étanchéité qui seraient implantés dans ce dispositif à la place des matériaux autolubrifiants. Enfin, un autre inconvénient qui découle de ceux précédemment évoqués, concerne l'impossibilité pour ce dispositif de réaliser des prélèvements de matériaux en phase liquide telle qu'une solution ou une suspension, et en phase gazeuse, ou encore de réaliser des prélèvements de matériaux quel que soit leur état solide, liquide ou gazeux, quand la zone de prélèvement se trouve à une pression supérieure ou inférieure à la pression atmosphérique.

Dès lors, et en raison des inconvénients précités, la Demanderesse poursuivant ses recherches a trouvé et mis au point un dispositif de prélèvement automatique mais aussi de conditionnement d'un volume calibré de matériaux solides pulvérulents, liquide ou gazeux, en vue de leur analyse, dans une zone de prélèvement où règne une pression supérieure, égale ou inférieure à la pression atmosphérique.

Le dispositif selon l'invention qui comprend une sonde cylindrique dans laquelle est ménagé un évidement longitudinal de capacité précise pour le prélèvement de l'échantillon, un manchon coaxial à la sonde, des moyens d'entraînement en un mouvement alternatif longitudinal de la sonde et du manchon coaxial, ainsi que des moyens d'étanchéité et de guidage de la sonde et du manchon coaxial, se caractérise en ce qu'il comporte :

a) une enceinte fermée de réception et de conditionnement de l'échantillon prélevé, munie de moyens d'introduction de fluides liquides et/ou gazeux permettant de conditionner les matériaux prélevés et de laver ensuite l'enceinte, et de moyens de dégazage et d'évacuation des matériaux conditionnés, ladite enceinte étant traversée par un cylindre servant de guide pour la sonde cylindrique et de support de joints antérieurs et postérieurs,

b) une sonde cylindrique de prélèvement se déplaçant longitudinalement dans le cylindre cité dans le paragraphe (a) comportant trois parties distinctes :

- la partie antérieure, d'un diamètre $\emptyset_1$ et d'une longueur au moins égale à l'épaisseur des joints antérieurs évoqués dans le paragraphe (a), et dont la face arrière est munie d'un épaulement assurant les fonctions d'appui, de centrage et d'étanchéité,

- la partie médiane d'un diamètre $\emptyset_2$ inférieur à $\emptyset_1$, munie de la cavité de contenance déterminée, destinée au prélèvement du matériau dans la zone de prélèvement, dont la face arrière est également munie d'un épaulement,

- la partie postérieure d'un diamètre $\emptyset_3$ inférieur à $\emptyset_2$, associée par un moyen connu aux moyens d'entraînement longitudinaux, supportant à son extrémité antérieure un joint d'étanchéité.

c) Le manchon coaxial se déplaçant dans le cylindre cité dans le paragraphe (a), de diamètre externe exactement égal à $\emptyset_1$ de la partie antérieure de la sonde cylindrique du paragraphe (b) assure, d'une part une continuité dimensionnelle avec la partie antérieure de la sonde cylindrique et, d'autre part, la fermeture de la cavité destinée au prélèvement des matériaux par déplacement longitudinal, manchon dont la face antérieure vient s'appuyer sur l'épaulement de la partie antérieure de la sonde cylindrique du paragraphe (b) et dont les surfaces externes et internes assurent, par l'intermédiaire de joints, les étanchéités entre l'enceinte fermée du paragraphe (a), la zone de prélèvement et l'atmosphère.

Selon l'invention, le dispositif poursuit le but de réaliser d'une manière instantanée et automatique le prélèvement d'un volume calibré de matériaux à analyser automatiquement à distance tel que par exemple en un ou plusieurs points de tout processus industriel comportant la transformation mécanique et/ou chimique de matières premières telles que minérales, la séparation de phases liquide et solide, le mélange de matériaux, le transfert de matériaux en cours de transformation, le conditionnement de matériaux finis,...

Les matériaux prélevés qui constituent les échantillons peuvent être sous forme solide pulvérulente, sous forme liquide telle qu'une solution, une émulsion, une suspension d'une phase solide dans une phase liquide ou enfin sous forme gazeuse d'un gaz seul ou d'un mélange de gaz.

La zone de prélèvement où se trouvent les matériaux à prélever en vue de leur analyse à distance peut être constituée par exemple par des zones de stockage de matière première ou de matières en cours de transformation ou encore de matières finies, par des zones de réaction ou de transformation, telles que par exemple réacteur chimique, broyeur, décanteur, séparateur de phases, four de calcination, lit fluidisé de décomposition, ou bien encore par des zones de transfert, telles que par exemple canalisation, lit fluidisé, transport pneumatique, bande transporteuse...

Cette zone de prélèvement qui, parce que le prélèvement est instantané et automatique, n'est pas perturbée par la prise d'échantillon, peut se trouver sous une pression supérieure, égale ou inférieure à la pression atmosphérique. Cette pression ne peut être limitée que par la forme et la qualité des joints utilisés.

De même, les matériaux présents dans la zone de prélèvement peuvent être à des températures très différentes. C'est ainsi, par exemple, que le dispositif selon l'invention a été expérimenté dans un intervalle de température aussi large que — 300 °C à + 350 °C, mais le dispositif peut également fonctionner dans un domaine de températures beaucoup plus large dépendant également de la forme et de la qualité des joints, mais aussi de la présence de moyens de refroidissement et/ou de réchauffement, tel que double enveloppe, serpentins permettant la circulation autour du dispositif de fluides caloporteurs ou frigoporteurs.

L'enceinte fermée de réception et de conditionnement de l'échantillon prélevé dans la zone de prélèvement peut être soumise aux mêmes pressions et températures que la zone de prélèvement, mais peut être également soumise à des pressions et températures différentes de celles régnantes dans ladite zone de prélèvement. Ladite enceinte fermée de réception et de conditionnement de l'échantillon est munie des moyens d'introduction de fluides liquides et/ou gazeux permettant de solubiliser les matériaux, de les mettre en état de suspension, d'émulsion ou de mélange, ou encore de les transformer chimiquement par une réaction « in situ », puis d'évacuer l'échantillon conditionné vers un analyseur automatique approprié, enfin de rincer l'enceinte après l'évacuation de l'échantillon.

Le cylindre traversant l'enceinte de réception et de conditionnement de l'échantillon est muni de joints d'étanchéité antérieurs et postérieurs.

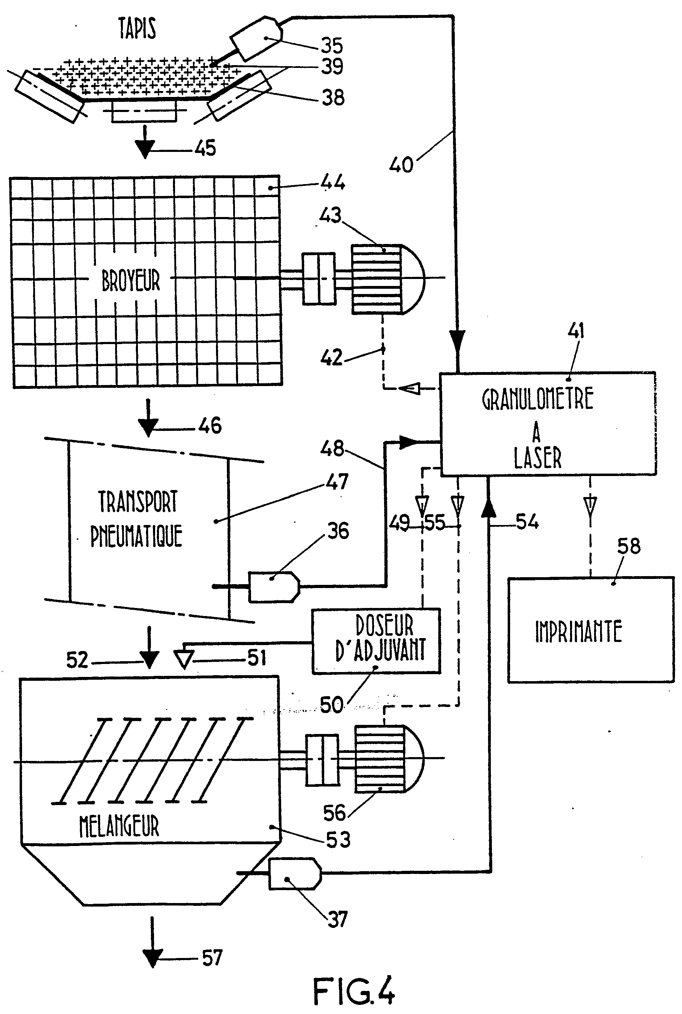

L'invention sera mieux comprise grâce à la description illustrative des figures 1 à 4.

La figure 1 représente une coupe longitudinale en élévation d'un mode particulier de réalisation du dispositif de prélèvement et de conditionnement d'échantillon à analyser.

Les figures 2(a) à 2(f) représentent des coupes longitudinales en élévation de la sonde cylindrique de prélèvement et du manchon coaxial dans les six phases successives d'un cycle de prélèvement, de réception et de conditionnement d'un échantillon.

La figure 3 représente une coupe longitudinale d'une variante, d'une part de l'épaulement de la face arrière de la partie antérieure de la sonde prélèvement, et d'autre part, de la face antérieure du manchon coaxial s'appuyant sur l'épaulement précité.

La figure 4 illustre un exemple d'applications industrielles du dispositif selon l'invention.

Selon la figure (1), le dispositif selon l'invention comporte d'abord une enceinte fermée (1) dans laquelle est réceptionné et conditionné l'échantillon prélevé dans la zone de prélèvement. L'enceinte (1) est munie de moyens d'introduction (2) de fluides liquides et/ou gazeux permettant de conditionner l'échantillon, c'est-à-dire de solubiliser, de mettre en suspension ou en émulsion ou de faire réagir lesdits matériaux prélevés, mais aussi des fluides de lavage de l'enceinte, de même qu'elle est munie de moyens de dégazage (22) et de moyens d'évacuation (3) des matériaux conditionnés.

Ladite enceinte (1) est également traversée par un cylindre (4) servant de guide et de support de joints antérieurs (5) et postérieurs (6).

Le dispositif selon l'invention comporte ensuite une sonde de prélèvement (7) qui se déplace longitudinalement dans le cylindre (4) de l'enceinte (1) en étant entraînée dans un mouvement automatique alternatif par des moyens connus (non représentés) de commande et de transmission du mouvement. La sonde (7) se compose de trois parties distinctes :
- la partie antérieure (8) de diamètre $\varnothing_1$ et d'une longueur au moins égale à l'épaisseur des joints antérieurs (5) dont la surface externe (9) est rectifiée et dont la face arrière (10) est munie d'un épaulement (11) assurant les fonctions d'appui, de centrage et d'étanchéité.
- La partie médiane (12) d'un diamètre $\varnothing_2$ inférieur à $\varnothing_1$ munie de la cavité (13) de contenance déterminée, destinée au prélèvement du matériau dans la zone de prélèvement, partie médiane dont la surface externe (14) est rectifiée et dont la face arrière est munie d'un épaulement (15).
- La partie postérieure (16) enfin, d'un diamètre $\varnothing_3$ inférieur à $\varnothing_2$, associée par un moyen connu (non représenté) aux moyens d'entraînements longitudinaux supportant à son extrémité antérieure un joint d'étanchéité (17).

Le dispositif selon l'invention comporte enfin un manchon coaxial (18) se déplaçant longitudinalement dans le cylindre (4), de diamètre externe exactement égal au diamètre $\varnothing_1$ de la partie antérieure (8) de la sonde de prélèvement (7), assurant d'une part une continuité dimensionnelle avec ladite partie antérieure (8), et d'autre part la fermeture de la cavité (13) par déplacement longitudinal, manchon (18) dont la face antérieure (19) vient s'appuyer sur l'épaulement (11) de la partie antérieure (8) de la sonde cylindrique (7) et dont les surfaces externes (20) et internes (21) sont rectifiées, ledit manchon (18) assurant par sa face interne (21) l'étanchéité entre l'enceinte (1) et l'atmosphère au moyen de joints (17) quand la sonde cylindrique (7) se déplace à l'intérieur dudit manchon, tandis que la face externe (20) assure l'étanchéité, d'une part entre la zone de prélèvement et l'enceinte (1) au moyen de joints d'étanchéité (5) et d'autre part entre l'enceinte (9) et l'atmosphère au moyen de joints d'étanchéité (6) quand ledit manchon (18) se déplace dans le cylindre (4). L'enceinte fermée de réception et de conditionnement de l'échantillon est également munie de moyens (23) de refroidissement et/ou de réchauffement.

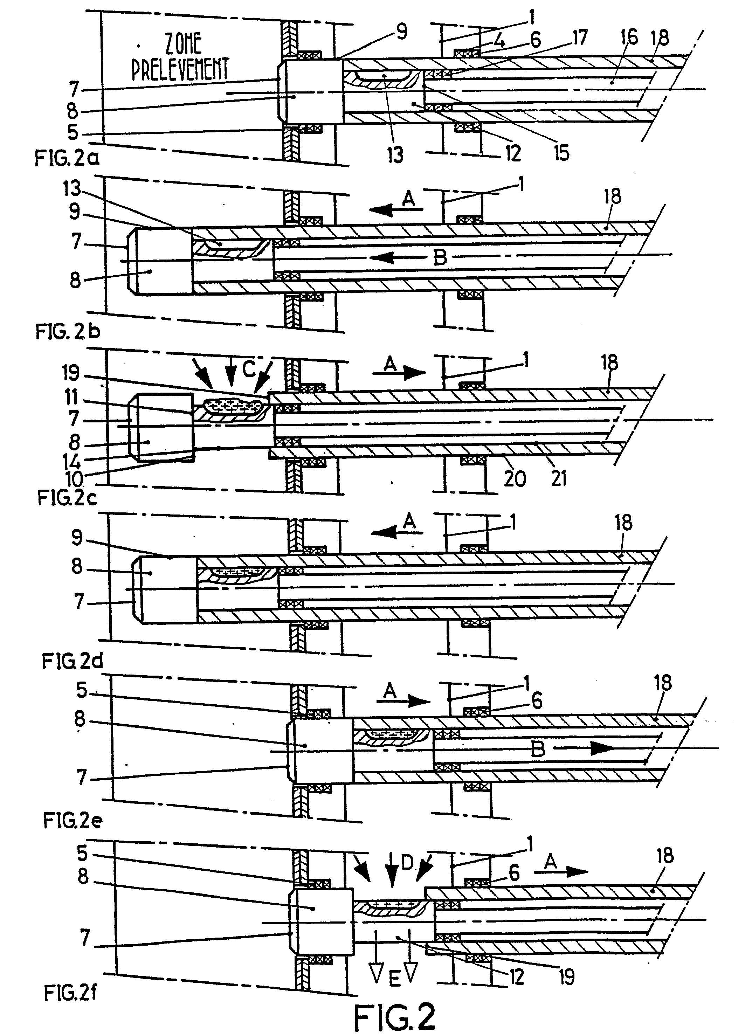

Les figures 2 (a) à 2 (f) illustrent le fonctionnement du dispositif selon l'invention.

La figure 2 (a) représente la sonde de prélèvement (7) ainsi que le manchon coaxial (18) au repos.

La figure 2 (b) montre la position dans la zone de prélèvement de la sonde de prélèvement (7) et du manchon coaxial (18) fermant la cavité de prélèvement (13) quand sonde et manchon ont été introduits simultanément dans ladite zone de prélèvement par des moyens non représentés selon les flèches (A) pour le manchon (18) et (B) pour la sonde (7).

La figure 2 (c) représente la sonde (7) au repos, mais en position de prélèvement des matériaux (C) à analyser quand le manchon coaxial (18) libère la cavité (13) par le mouvement longitudinal représenté par la flèche (A).

La figure 2 (d) illustre le calibrage de l'échantillon prélevé au moyen du manchon coaxial (18) quand ledit manchon est poussé selon le sens de la flèche (A) pendant que la sonde (7) est encore au repos.

La figure 2 (e) montre l'introduction de l'échantillon dans l'enceinte fermée (1) de réception et de conditionnement par le mouvement simultané selon la flèche (A et B) de la sonde de prélèvement (7) et du manchon coaxial (18).

La figure 2 (f) révèle le conditionnement de l'échantillon prélevé par l'introduction de fluides appropriés selon (D) et l'évacuation de l'échantillon conditionné selon (E).

Les mouvements longitudinaux de la sonde de prélèvement (7) et du manchon coaxial (18), (non représentés), peuvent être assurés par des moyens mécaniques, hydrauliques, électriques ou pneumatiques. Ils peuvent être programmés à l'avance et télécommandés, se réalisant ainsi sans intervention humaine.

De plus, les moyens constitués par les surfaces rectifiées, externe (9), de la partie antérieure (8) de la sonde (7), externe (14) de la partie médiane (12) de ladite sonde, externe (20) et interne (21) du manchon coaxial (18), les joints antérieurs (5) et postérieurs (6) de la sonde (7), les épaulements (11) et (15), les joints d'étanchéité (17) de la partie postérieure (16) de la sonde (7) de prélèvement, de même que la continuité dimensionnelle entre le manchon coaxial (18) de diamètre $\varnothing_1$ et la partie antérieure (8) de la sonde cylindrique (7) de même diamètre $\varnothing_1$, assurent une excellente étanchéité entre la zone de prélèvement et l'enceinte d'une part, entre l'enceinte et l'atmosphère d'autre part, quelle que soit la position relative de la sonde de prélèvement (7) et du manchon coaxial (18) au cours du cycle de prélèvement de l'échantillon.

Le fonctionnement du dispositif tel qu'il apparaît dans les figures 2 (a) à 2 (f) est le suivant.

En considérant le dispositif dans la position de repos (figure 2 a), la cavité (13) qui se trouve dans l'enceinte fermée (1) de réception et de conditionnement de l'échantillon, est close grâce à la position relative de la sonde de prélèvement (7) et le manchon coaxial (18). L'étanchéité entre la zone de prélèvement, l'enceinte fermée (1) et l'atmosphère est assurée de manière très efficace par les points (5), (6) et (17) en contact avec les surfaces rectifiées (9), (14), (20) et (21). L'ensemble constitué par la sonde (7) et le manchon coaxial (18) est soumis à un mouvement longitudinal par des moyens appropriés (non représentés) et pénètre dans la zone de prélèvement de l'échantillon en plaçant la cavité (13) maintenue close au sein de ladite zone (figure 2 b). Puis le manchon coaxial (18) est alors soumis à un mouvement longitudinal inverse par un moyen approprié (non représenté) pendant que la sonde de prélèvement reste au repos. La cavité (13) de la sonde (7) est ainsi ouverte et se remplit, par gravité, de l'échantillon à analyser (figure 2 c), l'étanchéité étant toujours parfaitement assurée entre la zone de prélèvement, l'enceinte (1) et l'atmosphère. La cavité (13) étant remplie, le manchon coaxial (18) est soumis à un nouveau mouvement longitudinal qui met en appui intime sa face antérieure (19) avec l'épaulement (11) de la partie antérieure (8) de la sonde, assurant ainsi le calibrage de l'échantillon prélevé par élimination de l'excès de matériaux, mais aussi le centrage dudit manchon coaxial (18) par rapport à la sonde (7) et l'étanchéité de la cavité (13), (figure 2 d). L'échantillon étant ainsi calibré dans la cavité (13), l'ensemble constitué par la sonde (7) et le manchon coaxial (18), en position d'appui, est soumis à un mouvement longitudinal (provoqué par des moyens non représentés) et pénètre dans l'enceinte fermée (1) de réception et de conditionnement de l'échantillon, l'étanchéité étant toujours remarquablement bien assurée entre la zone de prélèvement, l'enceinte fermée (1) et l'atmosphère (figure 2 e). Le manchon coaxial (18) est alors soumis à un nouveau mouvement longitudinal pendant que la sonde (7) reste au repos dans l'enceinte (1) de réception et de conditionnement. Dès lors, la cavité (13) est ainsi ouverte et l'échantillon est conditionné par injection selon les flèches (D), (figure 2 f) des fluides appropriés, avant d'être conduit hors de l'enceinte (1) vers tout appareillage d'analyse approprié (non représenté).

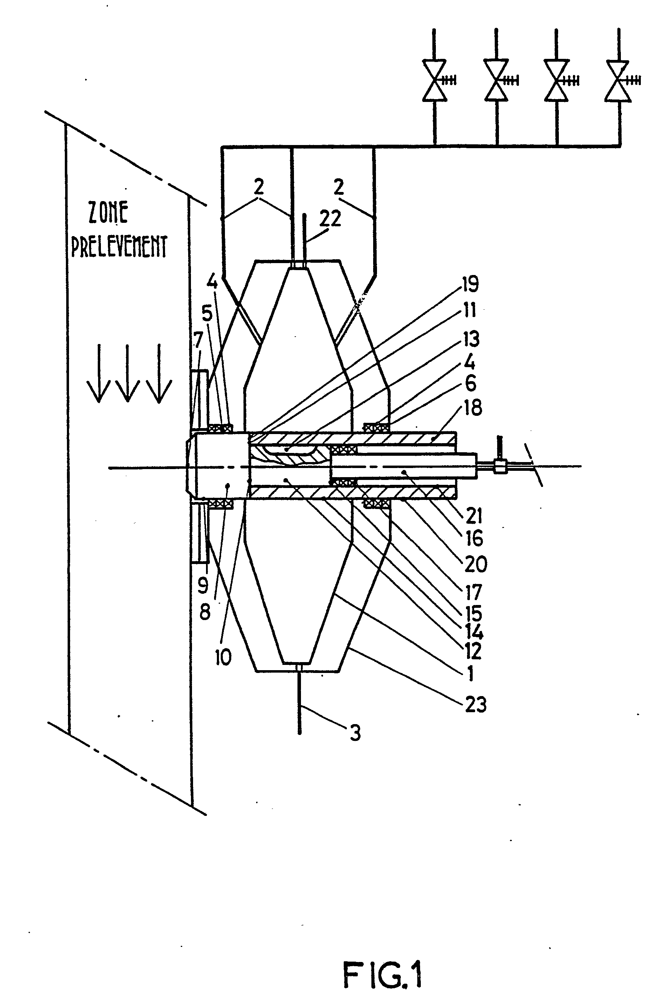

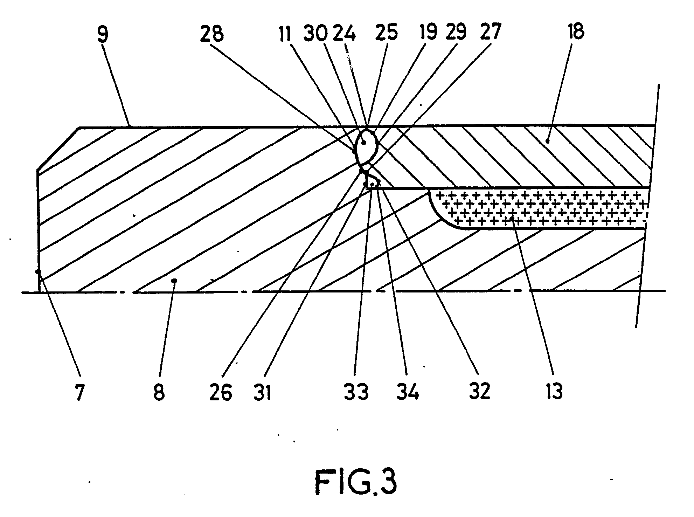

La figure 3 présente une coupe longitudinale en élévation d'une variante de l'épaulement (11) de la partie antérieure (8) de la sonde de prélèvement (7) et une variante de la face antérieure (19) du manchon coaxial (18) qui prend appui sur ledit épaulement (11). Dans le cas des figures 1 et 2a à 2f, l'épaulement (11) de la sonde de prélèvement (7) et la face antérieure (19) du manchon coaxial (18) sont des surfaces planes perpendiculaires à l'axe de la sonde. Mais, il peut se faire que l'épaulement (11) de la sonde de prélèvement soit constitué par une surface plane se situant dans un plan perpendiculaire au plan d'élévation de la sonde de prélèvement mais dont la trace en élévation détermine un angle aigu ou obtu par rapport à l'axe de la sonde (7). Dès lors, la face antérieure (19) du manchon coaxial (18) peut être formée d'une surface parallèle à celle de l'épaulement (11) ou bien encore en opposition par rapport à la surface dudit épaulement formant un angle obtu avec l'axe de la sonde (7) quand l'angle formé par la trace en élévation dudit épaulement (11) avec le même axe est aigu. Ainsi, l'épaulement (11) et la face antérieure (19) du manchon coaxial sont en contact intime et complet quand les deux surfaces sont bien parallèles, ou bien ne sont en contact que par une couronne périphérique quand les deux surfaces de (11) et (19) sont en opposition, c'est-à-dire à contre pente (cas non illustrés). Toutefois, il peut se produire quelques incidents quand la cavité (13) remplie de l'échantillon à analyser est fermée par le déplacement du manchon coaxial (18), (figures 2 c et 2 d). Dans le cas particulier en effet, où le matériau prélevé est un solide pulvérulent, un ou plusieurs grains peuvent rester entre l'épaulement (11) de la sonde de prélèvement et la face antérieure (19) du manchon coaxial. C'est pourquoi épaulement (11) et face antérieure (19) peuvent être constitués par des surfaces courbes dont l'intersection avec le plan d'élévation longitudinale se manifeste par une succession de lignes droites ou courbes. Dans le cas de la figure (3), l'épaulement (11) de la sonde de prélèvement (7) d'une part et la face antérieure (19) du manchon coaxial (18) sont en contact par les couteaux (24) et (25) qui éliminent les grains et par les surfaces (26) et (27). Les surfaces (28) et (29) créent une première zone de décompression (30) qui recueille les fragments de grains provoqués par l'application des couteaux (24) et (25) tandis que les surfaces (31) et (32) créent une deuxième zone de décompression (33) qui reçoit par l'action du couteau (34) les excès de matériau lors du calibrage de l'échantillon. Les deux zones de décompression (30) et (33) recueillent, en pratique, des quantités négligeables de matériau.

Selon la figure (4), exemple d'application industrielle du dispositif selon l'invention, trois dispositifs de prélèvement (35), (36) et (37) sont implantés dans une chaîne de production industrielle de pigments minéraux.

Un tapis roulant (38) véhicule la matière première prébroyée (39). Le dispositif de prélèvement (35) prélève toutes les quatre minutes un échantillon de 1 cm$^3$ qui, après conditionnement, est conduit par la canalisation jusqu'au granulomètre Laser (41). Le résultat de l'analyse automatique de l'échantillon, traité par le calculateur du granulomètre provoque l'émission par (42) d'un ordre d'augmentation, de maintien ou de diminution de l'activité du moteur (43) commandant le broyeur (44) au moment où le matériau (39) analysé entre dans le broyeur (44) par le moyen (45). A la sortie du broyeur (44), le matériau finement broyé (46) est introduit dans un transport pneumatique (47) pour être conduit vers une autre étape du procédé. Le dispositif (36) selon l'invention prélève et conditionne l'échantillon provenant du transport pneumatique (47). L'échantillon prélevé représentant un volume de 0,25 cm$^3$ est alors conduit par (48) jusqu'au granulomètre Laser (41). Le résultat d'analyse, géré par le calculateur du granulomètre, provoque l'émission par (49) d'une information réglant le débit du doseur (50) fournissant par (51) un adjuvant qui doit être mélangé au matériau broyé (52), adjuvant et matériau broyé étant introduits simultanément dans le mélangeur (53). Comme l'opération de mélange doit être très homogène, le dispositif (37) selon l'invention prélève également toutes les quatre minutes un échantillon de 0,5 cm$^3$ qui après avoir été conditionné est conduit par (54) jusqu'au granulomètre à Laser (41). Le résultat de l'analyse géré par le calculateur associé au granulomètre (41) provoque l'émission d'une information par (55) agissant sur le moteur (56) pour maintenir la qualité du mélange à son plus haut niveau. Ainsi, le produit fini extrait du cycle de fabrication par (57) a été suivi, par contrôle automatique de proche en proche, pendant tout le cycle de production, permettant de maintenir ainsi chaque étape dans les limites de qualité.

Toutes les analyses granulométriques ont été enregistrées sur une imprimante (58), couplée avec le granulomètre à Laser (41).

## Revendications

1. Dispositif de prélèvement automatique d'un volume calibré de matériaux solides pulvérulents, liquides sous forme de solution, suspension ou émulsion, ou gazeux, présents dans une zone de prélèvement éventuellement chaude, dans laquelle règne une pression supérieure, égale ou inférieure à la pression atmosphérique, et de conditionnement des matériaux prélevés en vue de leur analyse, comprenant une sonde cylindrique dans laquelle est ménagé un évidement longitudinal de capacité précise, un manchon coaxial à la sonde, des moyens d'entraînement en un mouvement alternatif longitudinal de la sonde et du manchon coaxial et des moyens d'étanchéité et de guidage de la sonde et du manchon coaxial, caractérisé en ce qu'il comporte :

a) une enceinte fermée (1) de réception et de conditionnement de l'échantillon munie de moyens d'introduction (2) de fluides liquides et/ou gazeux permettant de solubiliser, de mettre en suspension ou en émulsion, ou de faire réagir lesdits matériaux et de laver ensuite l'enceinte, et de moyens de dégazage (22) et d'évacuation (3) des matériaux conditionnés, ladite enceinte étant traversée par un cylindre (4) servant de guide et de support de joints antérieurs (5) et postérieurs (6),

b) une sonde cylindrique (7) de prélèvement se déplaçant longitudinalement dans le cylindre (4) comportant trois parties distinctes,

- la partie antérieure (8) de diamètre $\emptyset_1$ et d'une longueur au moins égale à l'épaisseur des joints antérieurs (5) et dont la surface externe (9) est rectifiée et dont la face arrière (10) est munie d'un épaulement (11) assurant les fonctions d'appui, de centrage et d'étanchéité,

- la partie médiane (12), d'un diamètre $\emptyset_2$ inférieur à $\emptyset_1$ munie de la cavité (13) de contenance déterminée, destinée au prélèvement du matériau dans la zone de prélèvement, dont la surface externe (14) est rectifiée et dont la face arrière est munie d'un épaulement (15),

- la partie postérieure (16) d'un diamètre $\emptyset_3$ inférieur à $\emptyset_2$, associée par un moyen connu aux moyens d'entraînement longitudinaux, supportant à son extrémité antérieure un joint d'étanchéité (17).

c) Le manchon coaxial (18) se déplaçant longitudinalement dans le cylindre (4), de diamètre externe égal à $\emptyset_1$ assurant d'une part une continuité dimensionnelle avec la partie antérieure (8) de le sonde cylindrique (7) et d'autre part la fermeture de la cavité (13) par déplacement longitudinal, manchon dont la face antérieure (19) vient s'appuyer sur l'épaulement (11) de la partie antérieure (8) de la sonde cylindrique (7) et dont les surfaces externes (20) et internes (21) sont rectifiées, ledit manchon (18) assurant par sa face interne (21), l'étanchéité entre l'enceinte (1) et l'atmosphère au moyen de joints (17) quand la sonde cylindrique (7) se déplace à l'intérieur dudit manchon, tandis que la face externe (20) assure l'étanchéité, d'une part entre la zone de prélèvement et l'enceinte (1) au moyen de joints d'étanchéité (5), et d'autre part entre l'enceinte (1) et l'atmosphère au moyen de joints d'étanchéité (6) quand le dit manchon (18) se déplace dans le cylindre (4).

2. Dispositif de prélèvement automatique d'un volume calibré de matériaux selon la revendication 1 caractérisé en ce que l'enceinte fermée (1) de réception et de conditionnement de l'échantillon fonctionne sous une pression supérieure, égale ou inférieure à la pression atmosphérique.

3. Dispositif de prélèvement automatique d'un volume calibré de matériaux selon les revendications 1 et 2 caractérisé en ce que l'enceinte fermée (1) de réception et de conditionnement de l'échantillon fonctionne dans un large domaine de températures, de préférence comprises entre — 30 °C et + 350 °C.

4. Dispositif de prélèvement automatique d'un volume calibré de matériaux selon l'une quelconque des revendications 1 à 3 caractérisé en ce que l'enceinte de prélèvement et de conditionnement de l'échantillon est munie de moyens de refroidissement et/ou de réchauffement.

5. Dispositif de prélèvement automatique d'un volume calibré de matériaux selon l'une quelconque des revendications 1 à 4 caractérisé en ce que l'enceinte fermée (1) de réception et de conditionnement de l'échantillon fonctionne sous les mêmes pression et température que la zone de prélèvement.

6. Dispositif de prélèvement automatique d'un volume calibré de matériaux selon l'une quelconque des revendications 1 à 5, caractérisé en ce que l'enceinte fermée (1) de réception et de conditionnement de l'échantillon fonctionne sous des pressions et températures différentes de celles régnant dans la zone de prélèvement.

7. Dispositif de prélèvement automatique d'un volume calibré de matériaux selon l'une quelconque des revendications 1 à 6 caractérisé en ce que la sonde de prélèvement (7) et le manchon coaxial (18) en appui sur l'épaulement (11) de ladite sonde par sa face antérieure (19), au repos dans l'enceinte fermée (1), sont simultanément et automatiquement introduits dans la zone de prélèvement.

8. Dispositif de prélèvement automatique d'un volume calibré de matériaux selon la revendication 7 caractérisé en ce que le manchon coaxial (18) est automatiquement désolidarisé de la sonde de prélèvement (7) au repos, par son retrait de la zone de prélèvement.

9. Dispositif de prélèvement automatique d'un volume calibré de matériaux selon la revendication 8, caractérisé en ce que le manchon coaxial (18) est automatiquement réintroduit dans la zone de prélèvement quand la cavité (13) de la sonde est pleine, jusqu'à être en appui sur l'épaulement (11) de la partie antérieure (8) de ladite sonde (7), au repos, par sa face antérieure (19).

10. Dispositif de prélèvement automatique d'un volume calibré de matériaux selon la revendication 9 caractérisé en ce que la sonde de prélèvement (7) et le manchon coaxial (18) en appui sur l'épaulement (11) de la partie antérieure (8) de ladite sonde par sa face antérieure (19) sont simultanément et automatiquement retirés de la zone de prélèvement jusqu'à l'enceinte fermée (1) de réception et de conditionnement de l'échantillon.

11. Dispositif de prélèvement automatique d'un volume calibré de matériaux selon la revendication (10) caractérisé en ce que, quand la sonde de prélèvement (7) est au repos dans l'enceinte fermée (1), la cavité (13) étant remplie de l'échantillon prélevé, le manchon coaxial (18) est désolidarisé de ladite sonde par son retrait hors de ladite enceinte fermée en vue de permettre le conditionnement dudit échantillon.

12. Dispositif de prélèvement automatique d'un volume calibré de matériaux selon l'une quelconque des revendications 1 à 11 caractérisé en ce que l'épaulement (11) de la partie antérieure (8) de la sonde de prélèvement (7) et la face antérieure (19) du manchon coaxial (18) sont des surfaces planes perpendiculaires à l'axe de la sonde.

13. Dispositif de prélèvement automatique d'un volume calibré de matériaux selon l'une quelconque des revendications 1 à 12 caractérisé en ce que l'épaulement (11) de la partie antérieure (8) de la sonde de prélèvement (7) et la face antérieure (19) du manchon coaxial (18) sont des surfaces planes dont la trace en élévation détermine un angle aigu ou obtu par rapport à l'axe de la sonde (7).

14. Dispositif de prélèvement automatique d'un volume calibré de matériaux selon la revendication 13 caractérisé en ce que la face antérieure (19) du manchon coaxial (18) est formée d'une surface parallèle à celle de l'épaulement (11) de la partie antérieure (8) de la sonde de prélèvement (7).

15. Dispositif de prélèvement automatique d'un volume calibré de matériaux selon la revendication 13 caractérisé en ce que la face antérieure (19) du manchon coaxial (18) est formée d'une surface en opposition à la surface de l'épaulement (11) de la partie antérieure (8).

16. Dispositif de prélèvement automatique d'un volume calibré de matériaux selon l'une des revendications 1 à 12 caractérisé en ce que l'épaulement (11) de la partie antérieure (8) et la face antérieure (19) sont constitués de surfaces courbes.

## Claims

1. Device for automatic withdrawal of a gauged volume of pulverulent solid materials, liquid materials in the form of solution, suspension or emulsion, or gaseous materials, present in a withdrawal zone which is optionally hot and in which the prevailing pressure is greater than, equal to or less than atmospheric pressure, and for conditioning of the withdrawn materials for the purpose of analysis thereof, comprising a cylindrical probe in which there is provided a longitudinal recess of exact capacity, a sleeve coaxial with the probe, means for driving the probe and the coaxial sleeve in a longitudinal reciprocating motion and means for sealing and guiding the probe and the coaxial sleeve, characterised in that it incorporates :

a) a closed chamber (1) for receiving and conditioning the sample, equipped with means (2) for introducing liquid and/or gaseous fluids enabling the said materials to be solubilised, brought into suspension or emulsion or caused to react, and then enabling the chamber to be washed, and means for outgassing (22) and removal (3) of the conditioned materials, a cylinder (4) which serves as a guide and as a support for the front seals (5) and rear seals (6) passing through the said chamber ;

b) a cylindrical withdrawal probe (7) which moves longitudinally in the cylinder (4), incorporating three distinct portions,

- the front portion (8) of diameter $\emptyset_1$ and length at least equal to the thickness of the front seals (5), the external surface (9) of which is precision-ground and the rear face (10) of which is equipped with a shoulder (11) which provides the functions of support, of centering and of imperviousness,

- the middle portion (12), of diameter $\emptyset_2$ less than $\emptyset_1$, equipped with the cavity (13) of specified capacity intended for withdrawal of the material in the withdrawal zone, the external surface (14) of which is precision-ground and the rear face of which is equipped with a shoulder (15),

- the rear portion (16), of diameter $\emptyset_3$ less than $\emptyset_2$, connected by a known means to the longitudinal driving means, and bearing a gasket (17) at its front end ;

c) the coaxial sleeve (18) moving longitudinally in the cylinder (4), of external diameter equal to $\emptyset_1$, providing, on the one hand for continuity of size with the front portion (8) of the cylindrical probe (7), and on the other hand for the closing of the cavity (13) by longitudinal movement, the front face (19) of the sleeve coming to bear on the shoulder (11) of the front portion (8) of the cylindrical probe (7) and the external surface (20) and internal surface (21) of the sleeve being precision-ground, the said sleeve (18) providing by its internal face (21) the imperviousness between the chamber (1) and the atmosphere by means of seals (17) when the cylindrical probe (7) moves inside the said sleeve, while the external face (20) provides for the imperviousness, on the one hand between the withdrawal zone and the chamber (1) by means of gaskets (5), and on the other hand between the chamber (1) and the atmosphere by means of gaskets (6) when the said sleeve (18) moves in the cylinder (4).

2. Device for automatic withdrawal of a gauged volume of materials according to Claim 1, characterised in that the closed chamber (1) for receiving and conditioning the sample operates under a pressure greater than, equal to or less than atmospheric pressure.

3. Device for automatic withdrawal of a gauged volume of materials according to Claims 1 and 2, characterised in that the closed chamber (1) for receiving and conditioning the sample operates within a broad temperature range, preferably between — 30 °C and + 350 °C.

4. Device for automatic withdrawal of a gauged volume of materials according to any one of Claims 1 to 3, characterised in that the chamber for withdrawing and conditioning the sample is equipped with cooling and/or heating means.

5. Device for automatic withdrawal of a gauged volume of materials according to any one of Claims 1 to 4, characterised in that the closed chamber (1) for receiving and conditioning the sample operates under the same pressure and at the same temperature as the withdrawal zone.

6. Device for automatic withdrawal of a gauged volume of materials according to any one of Claims 1 to 5, characterised in that the closed chamber (1) for receiving and conditioning the sample operates under different pressures and at different temperatures from those prevailing in the withdrawal zone.

7. Device for automatic withdrawal of a gauged volume of materials according to any one of Claims 1 to 6, characterised in that the withdrawal probe (7) and the coaxial sleeve (18) bearing on the shoulder (11) of the said probe by its front face (19), when at rest in the closed chamber (1), are simultaneously and automatically introduced into the withdrawal zone.

8. Device for automatic withdrawal of a gauged volume of materials according to Claim 7, characterised in that the coaxial sleeve (18) is automatically disconnected from the withdrawal probe (7) at rest, by its retraction from the withdrawal zone.

9. Device for automatic withdrawal of a gauged volume of materials according to Claim 8, characterised in that the coaxial sleeve (18) is automatically reintroduced into the withdrawal zone when the cavity (13) of the probe is full, until it is bearing, by its front face (19), on the shoulder (11) of the front portion (8) of the said probe (7) at rest.

10. Device for automatic withdrawal of a gauged volume of materials according to Claim 9, characterised in that the withdrawal probe (7) and the coaxial sleeve (18) bearing on the shoulder (11) of the front portion (8) of the said probe by its front face (19) are simultaneously and automatically removed from the withdrawal zone to the closed chamber (1) for receiving and conditioning the sample.

11. Device for automatic withdrawal of a gauged volume of materials according to Claim 10, characterised in that, when the withdrawal probe (7) is at rest in the closed chamber (1), the cavity (13) being full of the withdrawn sample, the coaxial sleeve (18) is disconnected from the said probe by being retracted out of the said closed chamber for the purpose of conditioning the said sample.

12. Device for automatic withdrawal of a gauged volume of materials according to any one of Claims 1 to 11, characterised in that the shoulder (11) of the front portion (8) of the withdrawal probe (7) and the front face (19) of the coaxial sleeve (18) are plane surfaces perpendicular to the axis of the probe.

13. Device for automatic withdrawal of a gauged volume of materials according to any one of Claims 1 to 12, characterised in that the shoulder (11) of the front portion (8) of the withdrawal probe (7) and the front face (19) of the coaxial sleeve (18) are plane surfaces, the trace of which in elevation gives rise to an acute or obtuse angle relative to the axis of the probe (7).

14. Device for automatic withdrawal of a gauged volume of materials according to Claim 13, characterised in that the front face (19) of the coaxial sleeve is formed from a surface parallel to that of the shoulder (11) of the front portion (8) of the withdrawal probe (7).

15. Device for automatic withdrawal of a gauged volume of materials according to Claim 13, characterised in that the front face (19) of the coaxial sleeve (18) is formed from a surface in opposition to the surface of the shoulder (11) of the front portion (8).

16. Device for automatic withdrawal of a gauged volume of materials according to one of Claims 1 to 12, characterised in that the shoulder (11) of the front portion (8) and the front face (19) consist of curved surfaces.

## Patentansprüche

1. Vorrichtung zur automatischen Entnahme einer Probe genau bemessenen Volumens fester, pulverförmiger Materialien, flüssiger Materialien in Form von Lösungen, Suspensionen oder Emulsionen oder gasförmiger Materialien, die sich in einem, gegebenenfalls heißen Probenentnahmebereich befinden, in dem ein Druck über, gleich oder unter Atmosphärendruck herrscht, und zur Aufbereitung der entnommenen Materialien für deren Analyse, bestehend aus einer zylindrischen Sonde mit einer Aussparung präzisen Volumens in Längsrichtung, einer zur Sonde koaxialen Hülse, Mitteln zur Hin- und Herbewegung der Sonde und der koaxialen Hülse in Längsrichtung und Mitteln zur Abdichtung und Führung der Sonde und der koaxialen Hülse, dadurch gekennzeichnet, daß sie aus

a) einem geschlossenen Raum (1) zur Aufnahme und Aufbereitung der Probe, versehen mit Mitteln zur Einleitung (2) von Flüssigkeiten oder Gasen zum Lösen, zur Suspensionsbildung oder zum Emulgieren der genannten Materialien oder zur Herbeiführung von Reaktionen mit ihnen, und zum anschließenden Waschen des Raumes, sowie mit Mitteln zum Entgasen (22) und zur Ableitung der aufbereiteten Materialien, Raum, der von einem Zylinder (4) durchquert wird, der als Führung und als Träger von vorderen (5) und hinteren Dichtungen (6) dient,

b) einer zylindrischen Sonde (7) zur Probenentnahme, die sich in Längsrichtung im Zylinder (4) bewegt und drei verschiedene Bereiche aufweist,

- einen Vorderteil (8) mit Durchmesser $\varnothing_1$ und einer Länge mindestens gleich der Dicke der vorderen Dichtungen (5), einer maßgeschliffenen Außenfläche (9) und einer Rückseite (10), versehen mit einem Ansatz (11), der die Funktionen der Abstützung, Zentrierung und Abdichtung erfüllt,

- einen Mittelteil (12) mit einem Durchmesser $\varnothing_2$, kleiner als $\varnothing_1$, versehen mit dem Hohlraum bestimmten Volumens, der zur Entnahme des Materials im Probenentnahmebereich bestimmt ist und dessen Außenfläche (14) maßgeschliffen und dessen Rückseite mit einem Ansatz (15) versehen ist,

- einen hinteren Teil (16) mit einem Durchmesser $\varnothing_3$ kleiner als $\varnothing_2$, der durch ein bekanntes Mittel mit den Mitteln zur Bewegung in Längsrichtung verbunden ist und an seinem vorderen Ende eine Dichtung (17) trägt,

c) die sich in Längsrichtung im Zylinder (4) bewegende koaxiale Hülse (18) mit Außendurchmesser gleich $\varnothing_1$, die einerseits einen stetigen Größenverlauf mit dem Vorderteil (8) der zylindrischen Sonde (7) und andererseits den Verschluß des Hohlraums (13) durch Bewegung in Längsrichtung sicherstellt, deren Vorderseite (19) am Ansatz (11) des Vorderteils (8) der zylindrischen Sonde (7) anliegt und deren Außen- (20) und Innenfläche (21) maßgeschliffen sind, Hülse, die durch ihre Innenseite (21) den Raum (1) gegen die Atmosphäre mittels Dichtungen (17) abdichtet, wenn sich die zylindrische Sonde (7) im Inneren der genannten Hülse bewegt, während die Außenfläche (20) einerseits mittels Dichtungen (5) den Raum (1) gegen den Probenentnahmebereich und andererseits mittels Dichtungen (6) den Raum (1) gegen die Atmosphäre abdichtet, wenn sich die genannte Hülse (18) im Zylinder (4) bewegt.

2. Vorrichtung zur automatischen Entnahme einer Probe genau bemessenen Volumens von Materialien nach Patentanspruch 1, dadurch gekennzeichnet, daß der geschlossene Raum (1) zur Aufnahme und Aufbereitung der Probe bei einem Druck über, gleich oder unter dem Atmosphärendruck arbeitet.

3. Vorrichtung zur automatischen Entnahme einer Probe genau bemessenen Volumens von Materialien nach den Patentansprüchen 1 und 2, dadurch gekennzeichnet, daß der geschlossene Raum (1) zur Aufnahme und Aufbereitung der Probe in einem großen Temperaturbereich arbeitet, vorzugsweise zwischen —30 °C und + 350 °C.

4. Vorrichtung zur automatischen Entnahme einer Probe genau bemessenen Volumens von Materialien nach irgendeinem der Patentansprüche 1 bis 3, dadurch gekennzeichnet, daß der Raum zur Entnahme und Aufbereitung der Probe mit Mitteln zur Abkühlung und/oder Erwärmung versehen ist.

5. Vorrichtung zur automatischen Entnahme einer Probe genau bemessenen Volumens von Materialien nach irgendeinem der Patentansprüche 1 bis 4, dadurch gekennzeichnet, daß der geschlossene Raum (1) zur Entnahme und Aufbereitung der Probe beim gleichen Druck und der gleichen Temperatur arbeitet, wie der Probenentnahmebereich.

6. Vorrichtung zur automatischen Entnahme einer Probe genau bemessenen Volumens von Materialien nach irgendeinem der Patentansprüche 1 bis 5, dadurch gekennzeichnet, daß der geschlossene Raum zur Entnahme und Aufbereitung der Probe bei einem anderen Druck und einer anderen Temperatur arbeitet, als der Probenentnahmebereich.

7. Vorrichtung zur automatischen Entnahme einer Probe genau bemessenen Volumens von Materialien nach irgendeinem der Patentansprüche 1 bis 6, dadurch gekennzeichnet, daß die Probenentnahmesonde (7) und die mit ihrer Vorderseite (19) am Ansatz (11) der genannten Sonde anliegende koaxiale Hülse (18), die im geschlossenen Raum (1) ruhen, gleichzeitig und automatisch in den Probenentnahmebereich eingeführt werden.

8. Vorrichtung zur automatischen Entnahme einer Probe genau bemessenen Volumens von Materialien nach Patentanspruch 7, dadurch gekennzeichnet, daß die koaxiale Hülse (18) in Ruhe automatisch von der Probenentnahmesonde (7) durch Zurückziehen aus dem Probenentnahmebereich getrennt wird.

9. Vorrichtung zur automatischen Entnahme einer Probe genau bemessenen Volumens von Materialien nach Patentanspruch 8, dadurch gekennzeichnet, daß die koaxiale Hülse (18) automatisch wieder in den Probeentnahmebereich eingeführt wird, wenn der Hohlraum (13) der Sonde voll ist, bis sie in Ruhestellung mit ihrer Vorderseite (19) am Ansatz (11) des Vorderteils (8) der genannten Sonde (7) anliegt.

10. Vorrichtung zur automatischen Entnahme einer Probe genau bemessenen Volumens von Materialien nach Patentanspruch 9, dadurch gekennzeichnet, daß die Probenentnahmesonde (7) und die mit ihrer Vorderseite (19) am Ansatz (11) des Vorderteils (8) der genannten Sonde anliegende koaxiale Hülse (18) gleichzeitig und automatisch aus dem Probenentnahmebereich bis zum geschlossenen Raum (1) zur Aufnahme und Aufbereitung der Probe zurückgezogen werden.

11. Vorrichtung zur automatischen Entnahme einer Probe genau bemessenen Volumens von Materialien nach Patentanspruch 10, dadurch gekennzeichnet, daß die koaxiale Hülse (18) zu dem Zeitpunkt, wo die Probenentnahmesonde (7) im geschlossenen Raum (1) ruht und der Hohlraum (13) mit der entnommenen Probe gefüllt ist, durch Zurückziehen aus dem geschlossenen Raum von der genannten Sonde getrennt wird, um die Aufbereitung der genannten Probe zu ermöglichen.

12. Vorrichtung zur automatischen Entnahme einer Probe genau bemessenen Volumens von Materialien nach irgendeinem der Patentansprüche 1 bis 11, dadurch gekennzeichnet, daß der Ansatz (11) des Vorderteils (8) der Probenentnahmesonde (7) und die Vorderseite (19) der koaxialen Hülse (18) ebene, zur Achse der Sonde senkrechte Flächen sind.

13. Vorrichtung zur automatischen Entnahme einer Probe genau bemessenen Volumens von Materialien nach irgendeinem der Patentansprüche 1 bis 12, dadurch gekennzeichnet, daß der Ansatz (11) des Vorderteils (8) der Probenentnahmesonde (7) und die Vorderseite (19) der koaxialen Hülse (18) ebene Flächen sind, die im Aufriß durch eine Linie dargestellt werden, die mit der Achse der Sonde (7) einen spitzen oder stumpfen Winkel einschließen.

14. Vorrichtung zur automatischen Entnahme einer Probe genau bemessenen Volumens von Materialien nach Patentanspruch 13, dadurch gekennzeichnet, daß die Vorderseite (19) der koaxialen Hülse (18) eine zur Oberfläche des Ansatzes (11) des Vorderteils (8) der Probenentnahmesonde (7) parallele Fläche ist.

15. Vorrichtung zur automatischen Entnahme einer Probe genau bemessenen Volumens von Materialien nach Patentanspruch 13, dadurch gekennzeichnet, daß die Vorderseits (19) der koaxialen Hülse (18) eine als Gegenstück zur Oberfläche des Ansatzes (11) des Vorderteils (8) geformte Fläche ist.

16. Vorrichtung zur automatischen Entnahme einer Probe genau bemessenen Volumens von Materialien nach irgendeinem der Patentansprüche 1 bis 12, dadurch gekennzeichnet, daß der Ansatz (11) des Vorderteils (8) und die Vorderseite (19) gekrümmte Flächen sind.

ZONE
PRELEVEMENT

FIG.1

FIG.2a

FIG.2b

FIG.2c

FIG.2d

FIG.2e

FIG.2f

FIG.2

FIG.3

FIG.4